Europäisches Patentamt

European Patent Office

Office européen des brevets

(19)

(11) Veröffentlichungsnummer : **0 360 168 B1**

## (12) EUROPÄISCHE PATENTSCHRIFT

(45) Veröffentlichungstag der Patentschrift :
**02.09.92 Patentblatt 92/36**

(51) Int. Cl.$^5$ : **B23Q 3/157**

(21) Anmeldenummer : **89117100.1**

(22) Anmeldetag : **15.09.89**

(54) **Werkzeugmaschine.**

(30) Priorität : **20.09.88 DE 3831869**

(43) Veröffentlichungstag der Anmeldung :
**28.03.90 Patentblatt 90/13**

(45) Bekanntmachung des Hinweises auf die
Patenterteilung :
**02.09.92 Patentblatt 92/36**

(84) Benannte Vertragsstaaten :
**CH DE ES FR GB IT LI SE**

(56) Entgegenhaltungen :
**EP-A- 0 129 677**
**DE-A- 2 064 863**
**DE-A- 3 330 442**
**DE-A- 3 521 009**
**DE-U- 8 315 670**
**FR-A- 1 548 447**
**FR-A- 2 123 152**

(73) Patentinhaber : **CHIRON-WERKE GMBH & CO.
KG
Talstrasse 23
W-7200 Tuttlingen (DE)**

(72) Erfinder : **Winkler, Hans-Henning, Dr.
Brunnentalstrasse 88
W-7200 Tuttlingen (DE)**
Erfinder : **Rütschle, Eugen
Schönenbergstrasse 20
W-7202 Mühlheim (DE)**

(74) Vertreter : **Witte, Alexander, Dr.-Ing. et al
Witte, Weller & Gahlert Patent- und
Rechtsanwälte Augustenstrasse 7
W-7000 Stuttgart 1 (DE)**

EP 0 360 168 B1

## Beschreibung

Die Erfindung betrifft eine Werkzeugmaschine mit einem Spindelstock, mit einem Werkzeugmagazin in dem eine Mehrzahl von mit Werkzeughaltern bestückten Greifern entlang einer Endlosbahn verfahrbar ist, und mit zwei Greifarmen zum Transportieren der Werkzeughalter Zwischen einer gemeinsamen Entnahme- bzw. Bestückungsposition am Werkzeugmagazin und einer Spindelposition an einem Spindelkopf des Spindelstockes, wobei die Greifarme beidseitig einer Achse des Spindelstockes auf gegenüberliegenden Seiten neben dem Spindelstock angelenkt und gleichzeitig und gegenläufig zwischen ihrer Spindelposition und ihrer Entnahme- bzw. Bestückungsposition verschwenkbar sind.

Aus der DE-PS 20 13 836 sowie der DE-AS 15 52 324 sind Werkzeugmaschinen mit Werkzeugwechseleinrichtungen bekannt, bei denen ein Greifarmpaar vorgesehen ist, um Werkzeughalter zwischen einem Werkzeugmagazin und einer Aufnahme des Spindelstockes durch alternative Betätigung hin- und herzutransportieren. Die Anordnung ist dabei so getroffen, daß beide Greifarme des Greifarmpaares mit derselben Bestückungs-/Entnahmeposition des Werkzeugmagazins zusammenarbeiten. Allerdings sind beide Greifarme identisch bzw. klappsymmetrisch ausgebildet und ihr Bewegungsablauf ist ebenfalls gegenläufig symmetrisch und zwar zur Spindelachse bzw. einem Punkt auf der Achse.

Diese beiden bekannten Werkzeugmaschinen haben daher den Nachteil, daß aufgrund des symmetrischen Bewegungsablaufes beider seitlich von der Spindelachse angeordneter Greifarme jedes Greifarmpaares zu beiden Seiten der Spindelachse ein erheblicher Freiraum vorhanden sein muß, um die Bewegung der Greifarme zu ermöglichen.

Bei einer weiteren, aus der DE-PS 35 21 009 bekannten Werkzeugmaschine weist das Magazin die Form eines U bzw. Hufeisens auf und die Entnahme- bzw. Bestückungsposition befindet sich an beiden Enden der Schenkel des U. Der Spindelkopf ist vor und unterhalb dieser Enden angeordnet. Die Greifarme arbeiten auf gegenüberliegenden Seiten des Spindelstockes und zwar derart, daß, falls sich der eine Arm mit seinem Werkzeughalter in der tiefer gelegenen Spindelposition befindet, der andere Arm derart seitlich verschwenkt ist, daß dessen Werkzeughalter sich in der Entnahme-bzw. Bestückungsposition an einem Ende des Hufeisenmagazins befindet. Bei einem Werkzeugwechsel wird der eine Arm, dessen Werkzeughalter an einem Ende des Hufeisenmagazins ein Werkzeug aufgenommen hat, in Richtung Spindelposition auf den Spindelstock zu bewegt. Gleichzeitig bewegt sich der andere Arm, dessen Werkzeughalter sich in der Spindelposition befunden hat, in gegensinniger Richtung wie der eine Arm vom Spindelkopf weg in Richtung auf das andere, gegenüberliegende Ende des Hufeisenmagazins, um dort das vom Spindelkopf abgenommene Werkzeug an das Magazin zu übergeben. Mit der bekannten Werkzeugmaschine ist ein Werkzeugwechsel zwar sehr rasch durchzuführen, allerdings baut eine derartige Maschine beidseitig des Spindelstockes sehr breit, da links und rechts vom Spindelstock genügend Raum für die Schwenkbewegung eines jeden Armes zur Verfügung stehen muß.

Es ist oftmals wünschenswert, insbesondere für Großserienfertigungen, bei einer Werkzeugmaschine mehrere nebeneinander angeordnete Spindelstöcke auf möglichst geringem Raum unterzubringen. Bei einer Maschine nach Art der eingangs genannten Maschine müßte dann der Mindestabstand zwischen zwei Spindelköpfen das doppelte der maximalen seitlichen Schwenkbreite eines Schwenkarmes betragen. Daraus würde sich beispielsweise bei einer Doppelspindelmaschine eine sehr breit bauende Maschine ergeben. Es ist ferner bei Doppelspindelstöcken wünschenswert, lediglich einen Antrieb für beide Spindelköpfe vorzusehen. Sind diese jedoch weit voneinander beabstandet, so können durch die langen Kraftübertragungswege Vibrationen und Unruhen entstehen, so daß sehr massive und somit schwergewichtige Werkzeugmaschinen hergestellt werden müßten, um dem entgegenzuwirken. Eine solche Werkzeugmaschine würde daher nicht nur sehr breit bauen, sondern wäre auch übermäßig schwer.

Aufgabe der vorliegenden Erfindung ist daher, eine Werkzeugmaschine der eingangs genannten Art derart weiterzubilden, daß unter Beibehaltung minimaler Werkzeugwechselzeiten ein geringerer Platzbedarf in seitlicher Richtung für die den Wechselvorgang durchführenden Bauteile notwendig ist. Darunter ist auch zu verstehen, daß eine Werkzeugmaschine mit einem Doppelspindelstock mit geringem Abstand der Spindelachsen geschaffen werden kann.

Erfindungsgemäß wird die Aufgabe dadurch gelöst, daß die Greifarme, einander überkreuzend, entlang von nur auf einer Seite des Spindelstockes verlaufenden Ortskurven zu der gemeinsamen Entnahme-bzw. Bestückungsposition verschwenkbar sind, die sich asymmetrisch zur Achse auf der einen Seite des Spindelstockes befindet.

Diese Maßnahmen haben den Vorteil, daß sich beide Schwenkarme lediglich zwischen der Spindelposition und ein und der selben Entnahme- bzw. Bestückungsposition bewegen. Das heißt, bewegt sich ein Arm mit seinem Werkzeughalter vom Spindelkopf in seitlicher Richtung auf das Magazin hin zu, bewegt sich gleichzeitig in entgegengesetzter Richtung der andere Arm vom Magazin zum Spindelkopf. Durch Vorsehen von ausweichenden Ortskurven die an den Endpunkten zusammentreffen, können die Arme aneinander vorbeibewegt

2

werden, ohne daß sie sich bzw. die von ihnen gehaltenen Werkzeughalter samt den darin befindlichen Werkzeugen treffen. Daraus folgt, daß der Raumbedarf für die verschwenkenden Arme, in der Breite gesehen, nur noch halb so groß ist wie bei den eingangs erwähnten Werkzeugmaschinen. Die Transportbewegung findet, von der Spindelstockachse aus gesehen, nur auf einer Seite des Spindelstockes bzw. der Spindelachse statt.

Die Maßnahme hat ferner den Vorteil, daß der Spindelstock auf einer Seite frei zugänglich ist, d.h. nicht durch das Magazin oder die verschwenkten Arme versperrt ist. Dadurch ist es beispielsweise möglich, Wartungs- und Reparaturarbeiten leichter durchzuführen. Ferner hat die Maßnahme den Vorteil, falls der Spindelstock in Querrichtung verfahrbar ist, daß dieser in der seitlichen Verfahrrichtung, die den Schwenkarmen gegenüberliegt, bis unmittelbar an ein ggf. vorhandenes Maschinengehäuse herangefahren werden kann. Dadurch können beispielsweise bei an sich gleichen Außenmaßen von Werkzeugmaschinen größere Werkstücke bearbeitet werden.

Bei einer weiteren Ausgestaltung der Erfindung ist der Spindelstock als Doppelspindelstock mit zwei Spindeln ausgebildet, wobei jede der Spindeln mit einem Paar von zwei Greifarmen versehen ist und die gemeinsame Entnahme- bzw. Bestückungsposition jedes Paares sich jeweils auf der von der jeweils anderen Spindel abgewandten Seite der Spindel befindet.

Diese Maßnahme hat den Vorteil, daß ein Doppelspindelstock realisiert werden kann, der nur eine minimale seitliche Ausdehnung aufweist.

Bei einer vorteilhaften Ausgestaltung der Erfindung ist jeder Greifarm maschinenseitig an einem Organ des Spindelstockes zwischen den Endpositionen hin- und herschwenkbar angelenkt, und jedes Organ des Spindelstockes ist um eine weitere Achse derart schwenkbar, daß die gegenläufig verschwenkbaren Arme berührungsfrei aneinander vorbeiführbar sind.

Diese Maßnahme hat den Vorteil, daß auf konstruktiv einfache Art und Weise die Greifarme ihre Verschwenkbewegung zwischen den Endpositionen durchführen können und gleichzeitig während des Verschwenkens in einer weiteren Raumrichtung verschwenkt werden können, um sich bei diesen Schwenkbewegungen nicht zu berühren. Durch die Überlagerung der Schwenkbewegung des Organes des Spindelstockes um die weitere Achse mit der Verschwenkbewegung der an dem Organ angelenkten Greifarme, kann auf einfache Weise eine gewünschte Ortskurve erzeugt werden, die an die Ausmaße der Werkzeughalter bzw. dem darin aufgenommenen Werkzeug einfach anpaßbar ist.

Bei einer bevorzugten Ausgestaltung der Erfindung ist jeder Greifarm um eine etwa senkrecht zur vertikalen Spindelachse verlaufenden Achse schwenkbar an einem Organ des Spindelstockes angelenkt, und die weitere Achse verläuft vertikal.

Diese Maßnahme hat den Vorteil, daß die Schwenkarme weiterhin eine im wesentlichen vor der Stirnfläche des Spindelstocks ablaufende Bewegung zwischen den Endpositionen durchführen können. Durch die Verschwenkbarkeit des schwenkbaren Organs um eine vertikale Achse, ist es möglich, durch bauliche einfache Maßnahmen, die zusätzliche Verschwenkbarkeit vom Spindelstock aus zu steuern, ohne daß raumergreifende, möglicherweise die Schwenkbewegung behindernde oder beeinträchtigenden Maßnahmen notwendig sind. Durch Einbetten der vertikal verlaufenden Schwenkachsen der verschwenkbaren Organe in den Spindelstock, kann eine stabile und präzise Führung der verschwenkenden Arme trotz Vorsehen einer zusätzlichen Verschwenkmöglichkeit sichergestellt werden.

In einer weiteren bevorzugten Ausgestaltung der Erfindung dient ein Betätigungsorgan zum Verschwenken der Arme auch zur Betätigung des verschwenkbaren Organes.

Diese Maßnahme hat den Vorteil, daß durch besonders einfache bauliche Maßnahmen beide Verschwenkbewegungen von ein und demselben Organ durchgeführt werden können. Daraus folgt trotz der Notwendigkeit einer zweiten Verschwenkmöglichkeit eine baulich wenig aufwendige Konstruktion.

In einer weiteren besonders bevorzugten Ausgestaltung der Erfindung ist das Betätigungsorgan mit einem Kulissenelement verbunden, das durch das Betätigungsorgan längs einer vertikalen Achse am Spindelstock auf- und abbewegbar ist, ferner ist das Kulissenelement über ein in einer Rinne des Kulissenelements laufendes Element mit einem verschwenkbaren Organ derart verbunden, daß ein Auf- und Abbewegen des Kulissenelements die verschwenkbaren Organe jeweils gegensinnig aus einer Ruhelage bis zu einem Maximum und dann wieder in die Ruhelage verschwenkt.

Diese Maßnahme hat den Vorteil, daß durch die Kulissenführung eine exakte Steuerung der Verschwenkbewegung des verschwenkbaren Organes durchgeführt werden kann. Durch die gegensinnige Verschwenkung der verschwenkbaren Organe müssen diese nur um einen relativ geringen Winkel verschwenkt werden, um am Ende der mit den Werkzeughaltern versehenen Greifarmen für einen solchen Abstand zu sorgen, daß diese Ende sich aneinander vorbeibewegen können. Ferner ist dabei sichergestellt, daß in den Endpositionen jedoch beide Werkzeughalter jeweils exakt die Position einnehmen, die der zuvor von dieser Position wegbewegte Greifarm bzw. dessen Werkzeughalter inne hatte.

In einer besonders bevorzugten Ausgestaltung der Erfindung sind die Rinnen derart konturiert, daß das Maximum der Verschwenkbewegung des verschwenkbaren Organes der Stellung entspricht, in der sich die Werkzeughalter der gegenläufig arbeitenden Arme kreuzen.

Diese Maßnahme hat den Vorteil, daß an der Stelle, an der sich die relativ weit ausladenden Werkzeughalter begegnen bzw. aneinander vorbeigleiten, der notwendige Maximalabstand zwischen den Armen geschaffen ist. Dadurch ist es möglich, beispielsweise bereits auf dem Markt gebräuchliche relativ weit ausladende Greifer zu verwenden. Die Werkzeuge führen dabei zwischen den Endpositionen entgegengesetzt gerichtet gekrümmte Ortskurven durch, deren maximaler Abstand exakt an der Begegnungsstelle vorliegt. Die Begegnungsstelle liegt etwa in der Mitte zwischen Spindelposition und Werkzeugmagazin (bzw. Entnahme- bzw. Bestückungsposition), d.h. an einer Stelle, die weder vom Spindelstock noch vom Magazin belegt wird, so daß für die Begegnung bzw. das Aneinandervorbeibewegen der beiden Greifer der Greifarme genügend Raum zur Verfügung steht, ohne daß besondere Raumvorkehrungen am Spindelstock oder am Magazin getroffen werden müssen.

In einer weiteren besonders bevorzugten Ausgestaltung der Erfindung ist das verschwenkbare Organ als plattenförmiger Körper ausgebildet, an dessen Außenseite ein Arm angelenkt ist, und vom Körper erstreckt sich eine Stange weg, die am äußeren Ende mit einem vorspringenden Element versehen ist, das in der Rinne des Kulissenelements läuft und dabei die Stange um ihre Längsachse verschwenkt. Diese Maßnahme hat den Vorteil, daß durch baulich einfache Maßnahmen die Verschwenkbewegung für das Ausweichen der Arme gesteuert werden kann, wobei eine exakte Führung gewährleistet ist. Ferner können diese Bauteile einfach ausgewechselt werden, d.h. an ggf. sich ändernde Werkzeuggrößen bzw. -breiten und damit ändernde Seitenabstände beim Aneinandervorbeigleiten der Arme angepaßt werden.

In einer Weiteren Ausgestaltung der Erfindung ist die Stange im Bereich zwischen plattenförmigem Körper und vorspringendem Element im Spindelstock axial fest, jedoch um ihre Längsachse verschwenkbar gehalten.

Diese Maßnahme hat den Vorteil, daß eine extrem feste Halterung und gute Führung im massiven Spindelstock möglich ist, so daß auch bei schwerstem Werkzeug mit ggf. Weit ausladenden Greifarmen eine feste Halterung der die Greifarme tragenden plattenartigen Körper gewährleistet ist.

In einer weiteren Ausgestaltung der Erfindung ist das Kulissenelement über je einen beidseitig angelenkten Stab mit je einem Arm derart verbunden, daß eine Bewegung des Kulissenelements in einer Richtung zwischen zwei vertikalen Endpunkten das gegenläufige Verschwenken der Arme zwischen deren Endpositionen verursacht, und daß der Stab dabei der Verschwenkbewegung des verschwenkbaren Organes folgt.

Diese Maßnahme hat den Vorteil, daß das Kulissenelement einerseits die Verschwenkung der Arme zwischen den Endpositionen über die Stäbe steuert und gleichzeitig durch die in den Rinnen des Kulissenelements laufenden vorspringenden Elemente der Stangen die Schwenkbewegung für das Aneinandervorbeigleiten steuert. Jeder Stab ist dabei an dem Kulissenelement in zwei Raumrichtungen schwenkbar angelenkt, so daß er den Schwenkbewegungen des Armes in allen Schwenkrichtungen folgen kann.

In einer weiteren Ausgestaltung der Erfindung ist der eine Stab mit einem ersten Arm, der als einarmiger Hebel ausgebildet ist, zwischen dessen Hebelachse und dessen äußeren, einen Greifer tragenden Ende gelenkig verbunden, und der andere Stab ist mit einem äußeren Ende eines zweiten Armes, der als zweiarmiger Hebel ausgebildet ist, gelenkig verbunden, wobei der zweite Arm an seinem anderen äußeren Ende mit einem Greifer versehen ist.

Diese Maßnahme hat den Vorteil, daß beispielsweise eine nach unten gerichtete Bewegung des Kulissenelements dafür sorgt, daß der erste Arm nach unten verschwenkbar, wohingegen der zweite Arm nach oben verschwenkbar ist. Es wird somit auf eine konstruktiv besonders einfache und stabile Weise durch ein in einer Richtung bewegendes Steuerorgan, d.h. die Bewegung des Kulissenelements, die gegenläufige Bewegung der beiden Arme hervorgerufen.

In einer weiteren Ausgestaltung der Erfindung ist jeder Arm mit einer Parallelogrammführung versehen. Diese an sich bekannte Maßnahme sorgt dafür, daß der Werkzeughalter samt dem Werkzeug in jeder Schwenkstellung seine vertikale Ausrichtung behält.

In einer weiteren vorteilhaften Ausgestaltung der Erfindung ist das Betätigungsorgan als in vertikaler Richtung arbeitende Kolben-Zylinder-Einheit ausgebildet, deren äußeres Kolbenstangenende mit dem Kulissenelement verbunden ist. Diese konstruktiv besonders einfache, stabile und somit sichere und exakt führende Ausgestaltung stellt sicher, daß durch das Betätigungsorgan über das Kulissenelement der notwendige Kraftfluß zu den Greifarmen hergestellt wird.

In einer weiteren Ausgestaltung der Erfindung weist das Betätigungsorgan zwei symmetrisch zur Spindelachse angeordnete Kolben-Zylinder-Einheiten auf, zwischen denen das Kulissenelement und darunter gelegen die jeweils verschwenkbaren Organe angeordnet sind, und daß die im Kulissenelement aufgenommenen Stangen ebenfalls symmetrisch zur Spindelachse verlaufen.

Die beidseitig angeordneten Kolben-Zylinder-Einheiten sorgen für einen verkantfreien Bewegungsablauf längs der Spindelachse. Durch die Aufnahme der Steuerelemente zwischen und unterhalb der Kolben-Zylinder-Einheiten, sind die Betätigungs- und Steuerorgane für die Schwenkbewegung äußerst günstig an der Stirnseite des Spindelstockes anordenbar, so daß der Bereich des Spindelkopfes weiterhin frei zugänglich bzw. lediglich durch die verschwenkenden Greifarme belegt wird. Die vertikale Führung der Kolben-Zylinder-Einheit sowie die vertikale Ausrichtung der Stangen, führt zu einem kompakten, steifen und verzugfreien Mechanismus, so daß ein exakter Ablauf des Werkzeugwechselvorganges auf Dauer sichergestellt ist.

In einer weiteren Ausgestaltung der Erfindung verläuft die Endlosbahn des Werkzeugmagazins T-förmig und die Endlosbahn ist in einer Ebene senkrecht zur Vertikalachse und höherliegend als die Spindelposition, verfahrbar, wobei sich die Entnahme-bzw. Bestückungsposition am unteren Ende des T befindet.

Diese Maßnahme hat den Vorteil, daß das Magazin sich seitlich sehr nah an den Spindelstock heranschmiegen kann. Der querverlaufende Bereich der T-förmigen Endlosbahn kann dann auf der rückwärtigen Seite hinter dem Spindelstock angeordnet werden.

In einer weiteren Ausgestaltung der Erfindung ist jeder Spindel jeweils ein Werkzeugmagazin mit T-förmiger Endlosbahn angeordnet.

Diese Maßnahme hat den Vorteil, daß zwei sehr benachbart angeordnete Spindeln mit wechselndem Werkzeug versorgt werden können. Die spiegelsymmetrische Anordnung der beiden Greifarmpaare ermöglicht eine relativ nahe Anordnung der beiden Spindeln, so daß die beiden Spindeln ohne größeren technischen Aufwand und ohne die Gefahr von Vibrationen aufgrund langer Kraftübertragungswege von einem einzigen Antrieb bewegt werden können. Die seitliche Ausladung dieser Doppelspindel entspricht etwa einer herkömmlichen Einfachspindel mit beidseitig gegensinnig verschwenkenden Armen, d.h. bei etwa gleicher Baubreite ist eine Verdoppelung der Arbeitsgeschwindigkeit durch Vorsehen zweier rasch versorgbarer Spindeln erreicht.

In einer weiteren Ausgestaltung der Erfindung sind beide Endlosbahnen über einen einzigen Antrieb mittels eines einmal gekreuzt geführten Riemenelements synchron verfahrbar.

Diese Maßnahme hat den Vorteil, daß synchron zwei identische Werkstücke durch die beiden Spindeln mit gleichartigen Werkzeugen gleichzeitig bearbeitet werden können, wobei eine spiegelbildliche Bestückung der T-förmigen Endlosbahnen dazu führt, daß eine durch einen einzigen Antrieb verursachte Bewegung des Riemenelements in beiden T-förmigen Endlosbahnen eine gleichsinnige Transportrichtung verursacht, d.h., daß in beiden Endlos-T-Bahnen zwei gleiche Werkzeuge zur Entnahme- bzw. Beschickungspositionen transportiert werden. Diese werden dann gleichzeitig von je einem Greifarm der beiden Greifarmpaare ergriffen und synchron zu jeweils einer Spindel gebracht. Dort können dann ebenfalls durch den gemeinsamen Spindelantrieb zwei gleichartige Bearbeitungsvorgänge an zwei verschiedenen Werkstücken synchron durchgeführt werden. Dadurch kann eine Verdopplung der Arbeitsleistung einer Werkzeugmaschine erreicht werden, wobei lediglich ein gemeinsamer Antrieb für beide Spindeln und ein gemeinsamer Antrieb für die beiden T-förmigen Endlosbahnen der Werkzeugmagazine vorgesehen sein muß. Ein weiterer Vorteil dieser Maßnahmen ist daß der Werkzeugwechsel vereinfacht wird, wenn vor Beginn eines neuen Produktionsvorganges das Magazin mit Werkzeughaltern bestückt bzw. nach Abschluß des Produktionsvorganges wieder entladen werden soll.

Infolge der gegenläufig angetriebenen Endlosbahnen erscheinen dann nämlich in dem Bereich, in dem die beiden horizontalen Balken der T-förmigen Endlosbahnen aneinander grenzen, immer die gleichen Werkzeughalter, die dann auch paarweise in das Magazin geladen bzw. aus diesem entladen werden können. Diese paarweise Bestückung vermindert jedoch das Risiko, beim Bestücken der Magazine Bestückungsfehler zu begehen.

In einer weiteren Ausgestaltung der Erfindung grenzen die T-förmigen Magazine hinter dem Hauptspindelstock an gegenüberliegenden äußeren Enden der querverlaufenden Abschnitte der T's aneinander, und sind in einem durchgehenden Magazingehäusee aufgenommen.

Diese Maßnahme hat den Vorteil, daß beide T-förmigen Endlosbahnen in einem einzigen Werkzeugmagazin aufgenommen werden können, das sich über die gesamte rückwärtige Seite des Hauptspindelstockes erstreckt und somit einen Raum ausfüllt, der zu diesem Zwecke frei und unbehindert zur Verfügung steht.

Bei einer weiteren Ausführungsform der Erfindung verläuft die Endlosbahn des Werkzeugmagazins hufeisenförmig, wobei sich die Entnahme- bzw. Bestückungsposition an einem freien Ende eines der Schenkel des Hufeisens befindet.

Diese Maßnahme hat den Vorteil, daß die erfindungsgemäße Werkzeugmaschine auch mit solchen Werkzeugmagazinen ausgestattet werden kann, wie sie als sogenannte "Hufeisenmagazine" im Stand der Technik bekannt sind.

Die Erfindung wird nachfolgend anhand einiger ausgewählter Ausführungsbeispiele in Zusammenhang mit den beiliegenden Zeichnungen näher beschrieben und erläutert. Es zeigen:

Fig. 1 stark schematisiert eine Vorderansicht einer erfindungsgemäßen Werkzeugmaschine;
Fig. 2 eine Draufsicht der Werkzeugmaschine von Fig. 1;
Fig. 3 eine detaillierte ausschnittsweise Vorderansicht der Werkzeugmaschine von Fig. 1;
Fig. 4 einen Schnitt längs der Linie IV-IV in Fig. 3;

Fig. 5 einen dem Schnitt von Fig. 4 entsprechende Darstellung einer verschwenkten Stellung eines schwenkbaren Organes der Werkzeugmaschine von Fig. 1;

Fig. 6 eine der Fig. 3 entsprechenden Darstellung, wobei eine andere Arbeitsstellung einer Werkzeugwechselvorrichtung der Maschine von Fig. 1 dargestellt ist;

Fig. 7 stark schematisiert eine erste, der Darstellung von Fig. 3 entsprechenden Arbeitsstellung einer Werkzeugwechseleinheit der Werkzeugmaschine von Fig. 1;

Fig. 8 eine Draufsicht auf die Werkzeugwechseleinheit von Fig. 8;

Fig. 9 die Werkzeugwechseleinheit von Fig. 7 in einer Übergangsstellung;

Fig. 10 eine Draufsicht der Werkzeugwechseleinheit von Fig. 9;

Fig. 11 eine zweite, der Darstellung von Fig. 6 entsprechenden Arbeitsstellung der Werkzeugwechseleinheit von Fig. 7;

Fig. 12 eine Draufsicht auf die Werkzeugwechseleinheit von Fig. 11;

Fig. 13 eine vergrößerte, stark schematisierte Darstellung eines Werkzeugmagazins der Werkzeugmaschine von Fig. 1 und 2; und

Fig. 14 eine weitere stark schematisierte Draufsicht auf ein Ausführungsbeispiel einer Werkzeugmaschine mit einem Hufeisenmagazin.

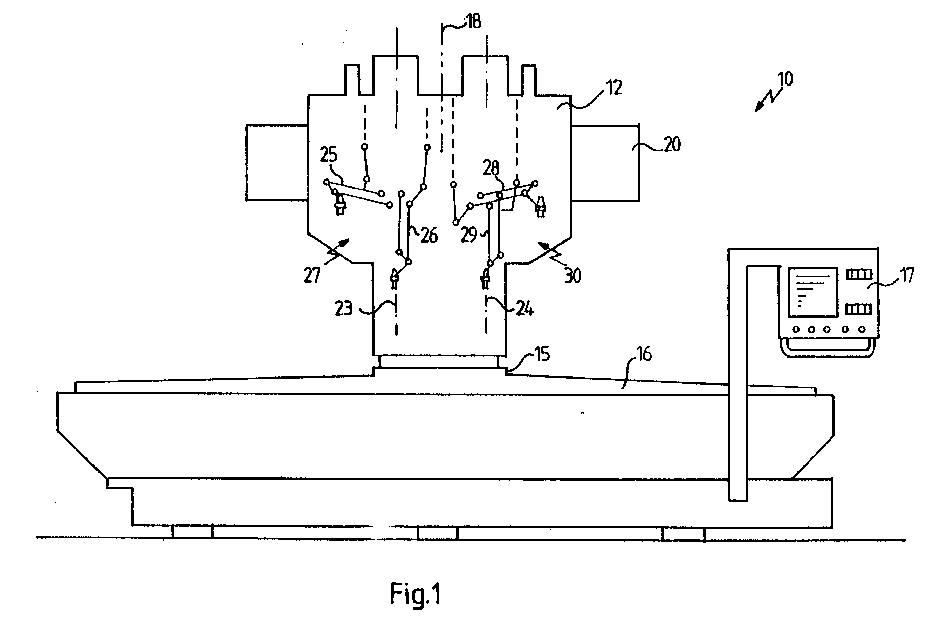

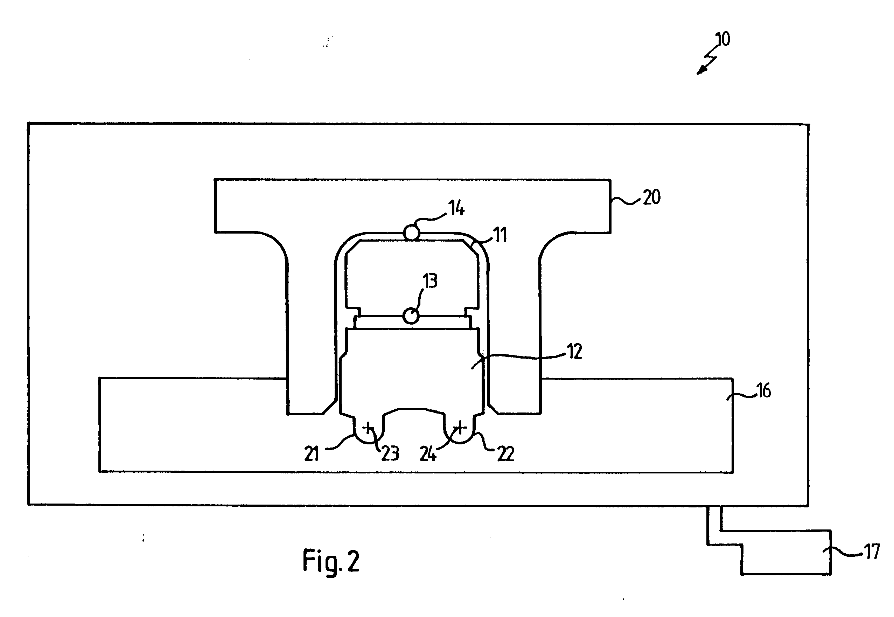

Eine in Fig. 1 und 2 gesamthaft mit 10 bezeichnete Werkzeugmaschine weist einen Spindelstock 12 auf, der über eine Haupt-Gewindespindel 13 (Fig. 2), die auf der Rückseite des Spindelstockes 12 angeordnet ist, höhenverschiebbar ist. Die Haupt-Gewindespindel 13 ist in einem Stützblock 11 aufgenommen, der auf der rückwärtigen Seite aus Stabilitätsgründen mit einer Stütz-Gewindespindel 14 versehen ist.

Der Spindelstock 12 ruht auf einem Sockel 15, der in einem Maschinenbett 16 in der Horizontalen (X-, Y-Achse) verschiebbar ist.

Die Werkzeugmaschine 10 ist ferner mit einem Steuerpult 17 ausgestattet, über den die Funktionen der Werkzeugmaschine steuerbar sind. Die Werkzeugmaschine ist mit einem hier nicht dargestellten Gehäuse versehen, um die bei einer spanabhebenden Bearbeitung anfallenden Späne bzw. die dabei verwendeten Bohrflüssigkeit vor Umherspritzen zurückzuhalten.

Der Spindelstock 12 ist in seinem oberen Endbereich von einem Werkzeugmagazin 20 umgeben, das sich seitlich und über die rückwärtige Seite des Spindelstockes 12 bzw. des Stützblockes 11 erstreckt. Die nähere Ausgestaltung des Werkzeugmagazins 20 wird später in Zusammenhang mit Fig. 13 beschrieben.

Der Spindelstock 12 ist an seiner Vorder- oder Stirnseite mit einer ersten Spindel 21 sowie mit einer zweiten Spindel 22 zur Aufnahme von Werkzeughaltern versehen. Eine erste Spindelachse 23 der ersten Spindel 21 sowie eine zweite Spindelachse 24 der zweiten Spindel 22 (siehe Fig. 2) verlaufen in vertikaler Richtung und im Abstand voneinander, wobei die Achse 18 der Haupt-Gewindespindel 13 in Vorderansicht gesehen (Fig. 2), zwischen den Spindelachsen 23 und 24 liegt.

Eine senkrecht zur Zeichenebene von Fig. 1 stehende, durch die Achse 18 verlaufende Ebene, trennt den Spindelstock 12 in zwei spiegelsymmetrische Spindelstockhälften.

Der Spindelstock 12 ist, entsprechend der Darstellung von Fig. 1, auf seiner linken Hälfte mit zwei Greifarmen 25 und 26 versehen, die ein erstes Greifarmpaar 27 bilden.

Auf der rechten Hälfte ist der Spindelstock 12 mit einem Greifarm 28 sowie mit einem Greifarm 29 versehen, die ein zweites Greifarmpaar 30 bilden.

Die Greifarmpaare 27, 30 sind beidseits der jeweils zugehörigen Spindelachse 23, 24 angelenkt. Die Greifarme 25, 26 bzw. 28, 29 jedes Greifarmpaares 27 bzw. 30 sind jedoch unterschiedlich ausgebildet und haben auch einen unterschiedlichen Bewegungsablauf, der asymmetrisch zur jeweiligen Spindelachse 23, 24 ist.

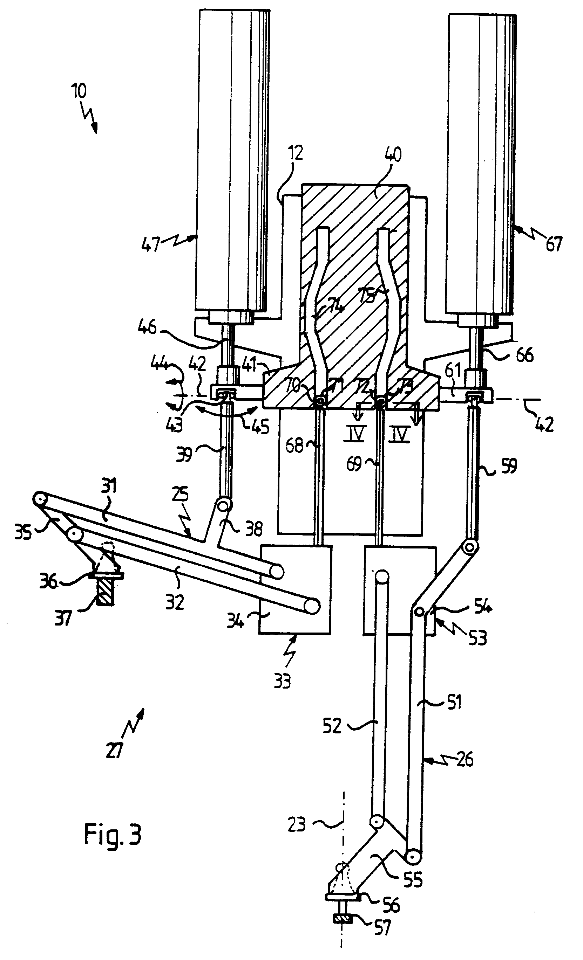

In Fig. 3 ist das erste Greifarmpaar 27, das in Fig. 1 auf der linken Hälfte des Spindelstockes 12 angeordnet ist, vergrößert dargestellt. Aus Übersichtlichkeitsgründen sind lediglich die nachfolgend beschriebenen Funktionsteile in Zusammenhang mit der Bewegung des ersten Greifarmpaares 27 dargestellt. Die in Fig. 3 gezeigte Stellung der Greifarme 25 und 26 entspricht der Darstellung bzw. der Position wie in Fig. 1 auf der linken Hälfte gezeigt.

Im nachfolgenden wird der Steuer- und Verschwenkmechanismus der Greifarme 25 und 26 näher beschrieben. Die konstruktive Ausgestaltung sowie der Bewegungsablauf des durch die Greifarme 25/26 gebildeten ersten Greifarmpaares 27 sind klappsymmetrisch zur durch die Achse 18 Verlaufenden Trennebene auch beim zweiten Greifarmpaar 30 verwirklicht. Das bedeutet, daß die nachfolgende detaillierte Beschreibung im Zusammenhang mit dem ersten Greifarmpaar 27 entsprechend auch für das zweite Greifarmpaar 30 gilt.

Der erste Greifarm 25 weist eine erste Stange 31 und eine zweite Stange 32 auf, die jeweils an einem verschwenkbaren Organ 33, in Form einer Platte 34 oder eines plattenförmigen Körpers angelenkt sind. Die Stangen 31 und 32 sind um senkrecht auf der Platte 34 stehende Achsen, die durch ihre Anlenkungspunkte verlaufen, verschwenkbar.

Die Stangen 31 und 32 sind an ihren äußeren, der Platte 34 gegenüberliegenden Enden, gelenkig mit einer Stange 35 verbunden, der einen Greifer 36 trägt, in dem ein Werkzeughalter 37 aufgenommen ist. Die Stangen 31 und 32 sind derart an die Platte 34 bzw. die Stange 35 angelenkt, daß dadurch ein parallelogrammartiges Gestänge gebildet wird.

Dies hat zur Folge, daß, wie an sich bekannt, ein Verschwenken des ersten Greifarmpaares 27 um die Anlenkungspunkte an der Platte 34 eine fortwährende horizontale Ausrichtung des Greifers 36 samt dem darin aufgenommenen Werkzeughalter 37 nach sich zieht.

Der Greifer 36 samt dem darin aufgenommenen Werkzeughalter 37 befindet sich in der in Fig. 3 dargestellten Stellung, in der sogenannten Entnahme- bzw. Bestückungsposition, die einer Endposition des ersten Greifarmpaares 27 entspricht.

In dieser Endposition kann über an sich bekannte Mechanismen der Werkzeughalter 37 entnommen und in das Magazin 20 überführt werden. Nachfolgend kann dann ein Werkzeughalter mit einem anderen Werkzeug aus dem Werkzeugmagazin 20 auf den Greifer 36 des ersten Greifarmpaares 27 überführt werden, d.h. das Werkzeug kann ausgewechselt werden.

Die obere Stange 31, die als einarmiger Hebel ausgebildet ist, ist im Bereich zwischen ihren äußeren angelenkten Enden mit einem etwa rechtwinklig abstehenden Ansatz 38 versehen, der kugelgelenkig mit einem Stab 39 verbunden ist.

Der Stab 39 ist an seinem gegenüberliegenden Ende mit einem seitlichen Vorsprung 41 eines Kulissenelementes 40 kugelgelenkig verbunden. Die Verbindung ist daher derart, daß der Stab 39 um eine Achse 42, wie dies durch einen Pfeil 44 angedeutet ist, verschwenkt werden kann. Außerdem kann der Stab 39 um eine zur Achse 42 senkrechte Achse 43 verschwenkt werden, wie dies durch einen Pfeil 45 angedeutet wird.

Der Stab 39 kann somit einer in der Zeichenebene liegenden Kreisbahn seines unteren Anlenkungspunktes mit dem Ansatz 38 folgen und kann auch Schwenkbewegungen des ersten Greifarmpaars 27 aus der Zeichenebene heraus, beispielsweise auf den Betrachter zu, folgen.

Der seitliche Vorsprung 41 des Kulissenelementes 40 ist an seiner oberen Seite, die der Anlenkungsstelle mit dem Stab 39 gegenüberliegt, mit dem äußeren Ende einer Kolbenstange 46 einer Kolben-Zylinder-Einheit 47 verbunden. Die Kolben-Zylinder-Einheit 47 ist dabei starr mit einer am Spindelstock 12 angeordneten Hülse verbunden. Die Längsachse der Kolben-Zylinder-Einheit 47 verläuft parallel zur vertikalen Achse 18 bzw. zur vertikalen Achse 23 der ersten Spindel 21.

Der zweite Greifarm 26 des ersten Greifarmpaares 27 enthält eine Stange 51, die als zweiarmiger Hebel ausgebildet ist. Die Stange 51 ist in ihrer Hebelachse gelenkig mit einem verschwenkbaren Organ 53 des Spindelstockes 12, das wie zuvor in Zusammenhang mit dem Organ 33 beschrieben, als Platte 54 bzw. plattenförmiger Körper ausgebildet ist. Die Platte 54 ist dabei auf gleicher Höhe wie die Platte 34 angeordnet, und die Plattenebenen beider Platten 54 und 34 liegen im verschwenkten Zustand in einer Ebene. Der Anlenkungspunkt der als zweiarmiger Hebel ausgebildeten Stange 51 an der Platte 54, befindet sich auf gleicher Höhe wie der Anlenkungspunkt der Stange 32 an der Platte 34.

Der Greifarm 26 weist ferner eine Stange 52 auf, die ebenfalls um eine senkrecht zur Zeichenebene verlaufende Achse schwenkbar an der Platte 54 angelenkt ist. Der Anlenkungspunkt der Stange 52 an der Platte 54 befindet sich auf gleicher Höhe wie der Anlenkungspunkt der Stange 31 des Greifarmes 27 an der Platte 34. Von den Stangen 31 bzw. 52 mit dem höheren Anlenkungspunkt befindet sich jedoch die Stange 31 des linken Greifarmes 25 außen und die Stange 52 des rechten Greifarmes 26 innen, jeweils bezogen auf die Symmetrieebene zwischen den beiden Greifarmen 25, 26.

Die Stangen 51 und 52 sind an ihrem äußeren, der Platte 54 gegenüberliegenden Ende gelenkig über eine Stange 55 verbunden, die mit einem Greifer 56 versehen ist, der einen Werkzeughalter 57 trägt. Auch die Stangen 51, 52 bilden ein parallelogrammartiges Gestänge, das dafür sorgt, daß, falls der Greifarm 26 um seine Anlenkungspunkte an der Platte 54 verschwenkt wird, der Greifer 56 samt dem darin aufgenommenen Werkzeughalter 57 in unveränderter horizontaler bzw. vertikaler Ausrichtung bleibt.

In der in Fig. 3 (entsprechend auch in Fig. 1) gezeigten Darstellung, befindet sich der Greifarm 26 in der sogenannten Spindelposition die einer Endposition des Greifarmes 26 entspricht. Die Längsmittelachse des im Greifer 56 aufgenommenen Werkzeughalters 57 befindet sich dabei exakt in der ersten Spindelachse 23 der ersten Spindel 21.

Der Greifer 56 ist mit einer Drehlagerung für den Werkzeughalter 57 versehen d.h. nach dem Einschieben des Werkzeughalters 57 in den Spindelkopf der ersten Spindel 21 verbleibt der Greifer 56 am Werkzeughalter 57 während des Bearbeitungsvorganges. Zur kraftschlüssigen Verbindung zwischen Werkzeughalter 57 und Spindelkopf kann dieser unter Relativverschiebung zur Hülse von oben auf den Werkzeughalter 57 abgesenkt Werden. Durch eine an sich bekannte abgekröpfte Ausbildung des Greifers 55 ist der Bereich des hier nicht näher dargestellten Spindelkopfes der ersten Spindel 21 frei zugänglich und wird nicht durch die Stangen 51, 52, 55 beeinträchtigt.

Das der Stange 55 abgewandte äußere Ende der als zweiarmiger Hebel ausgebildeten Stange 51 ist mit einem Stab 59 kugelgelenkig verbunden. Am gegenüberliegenden Ende ist der Stab 59 gleichermaßen wie zuvor in Zusammenhang mit dem Stab 39 beschrieben, mit einem seitlichen Vorsprung 61 des Kulissenelements 40 kugelgelenkig, d.h. um zwei Raumachsen schwenkbar verbunden. Der seitliche Vorsprung 61 ist dabei auf gleicher Höhe wie der entgegengesetzt gerichtete, in einer gemeinsamen Achse 44 liegende, seitliche Vorsprung 41 angeordnet.

Der seitliche Vorsprung 61 ist an seiner oberen, dem Anlenkungspunkt mit dem Stab 59 gegenüberliegenden Seite mit dem äußeren Ende einer Kolbenstange 66 einer Kolben-Zylinder-Einheit 67 verbunden.

Die Kolben-Zylinder-Einheit 67 ist starr mit einer am Spindelstock 12 angeordneten Hülse verbunden. Die Längsachse der Kolben-Zylinder-Einheit 67 erstreckt sich in vertikaler Richtung, d.h. sie verläuft parallel und im Abstand zur Längsachse der gegenüberliegenden Kolben-Zylinder-Einheit 47. Die Kolben-Zylinder-Einheit 47 ist in an sich bekannter Weise mit der Hülse relativ zum Spindelstock in Richtung der Spindelachse verschiebbar, um Werkzeughalter mit ihrem genormten Kegel in die ebenfalls kegelige Aufnahme des Spindelstockes einführen bzw. aus dieser wieder herausführen zu können.

Die Platte 34, an die der Greifarm 25 angelenkt ist, ist am oberen Ende mit einer nach oben in der Vertikalen vorspringenden Stange 68 versehen.

Gleichermaßen ist die den Greifarm 26 tragende Platte 54 mit einer parallel zur Stange 68 verlaufenden Stange 69 versehen.

Die Stangen 68 und 69 sind axial unbeweglich im Spindelstock 12 gelagert und dort um ihre Längsachse verschwenkbar gehalten.

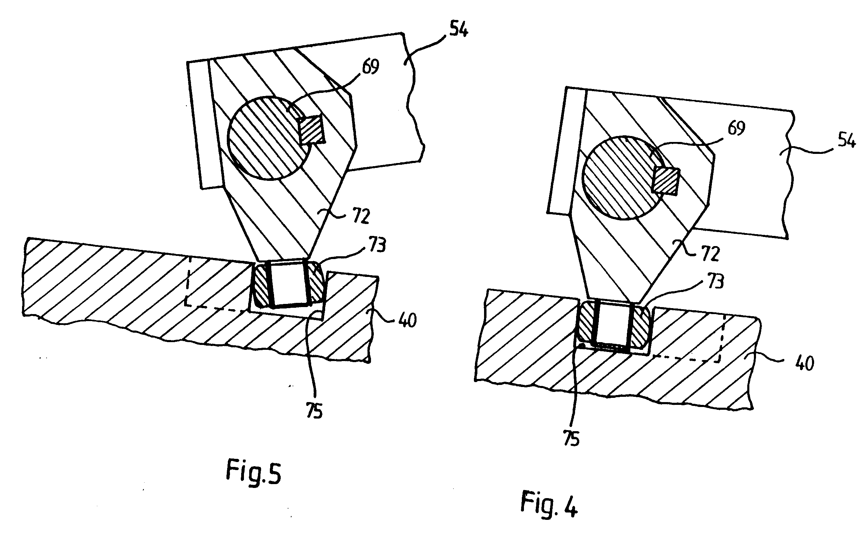

Die Stange 69 ist an ihrem oberen Ende mit einem etwa rechtwinklig von der Stangenlängsachse abgewinkelten, in Richtung zum Betrachter der Darstellung von Fig. 3 vorspringenden Element 72 versehen (siehe auch insbesondere Fig. 4), das an seinem äußeren vorderen Ende mit einer Rolle 73 versehen ist.

Die Rolle 73 ist in einer Rinne 75 des Kulissenelements 40 geführt. Das vorspringende Element 72 ist fest mit der Stange 69 verbunden. Die Rinne 75 ist derart konturiert, daß sie eine in der Draufsicht von Fig. 3 gesehen, nach rechts ausbauchende Kurvenkontur aufweist.

Die Stange 68 ist ebenfalls mit einem vorspringenden Element 70 versehen, das am äußeren Ende mit einer Rolle 71 versehen ist. Die Rolle 71 ist in einer Rinne 74 des Kulissenelements 40 geführt, die bezüglich der Spindelachse 23 spiegelbildlich zur Rinne 75 verläuft.

Wird das Kulissenelement 40 aus der in Fig. 3 dargestellten Position durch Ausfahren der Kolbenstangen 46 bzw. 66 der Kolben-Zylinder-Einheiten 47 bzw. 67 nach unten gedrückt, so laufen die Rollen 71 bzw. 73 in den Rinnen 74 bzw. 75.

Wie aus Fig. 4 zu entnehmen ist, die der Stellung der Rolle 73 in der Darstellung von Fig. 3 entspricht, läuft die Rolle 73 bei einer Abwärtsbewegung des Kulissenelements 40 zunächst in dem geradlinig verlaufenden Abschnitt der Rinne 75, ohne daß dabei die Stange 69 verschwenkt wird.

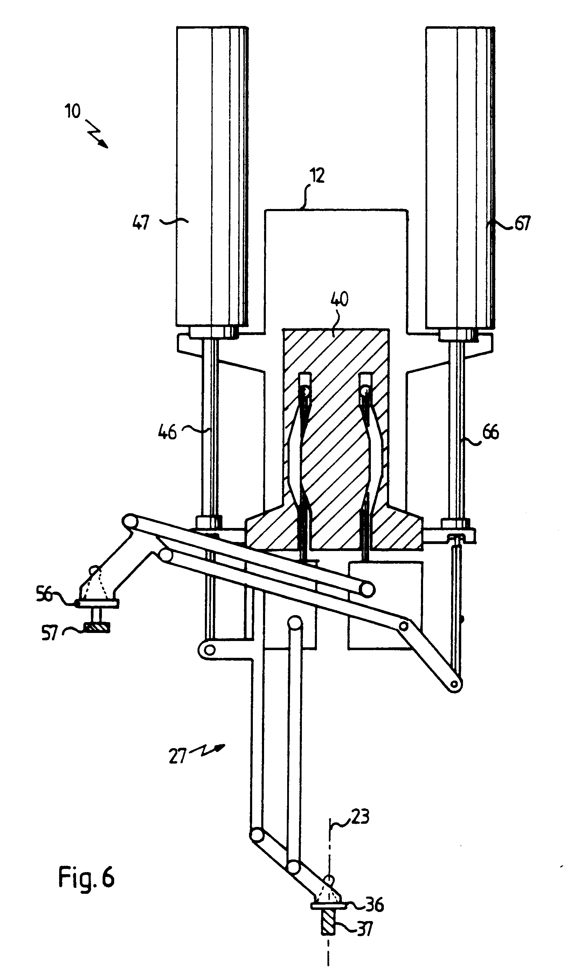

Ist das Kulissenelement 40 so weit nach unten gedrückt, daß die Rolle den nach rechts ausweichenden Abschnitt der Rinne 75 erreicht, wird die Rolle, wie in Fig. 5 dargestellt, nach rechts umgelenkt, und die starr mit ihr verbundene Stange 69 entgegen dem Uhrzeigersinn verschwenkt.

Bei dieser Verschwenkbewegung wird die am unteren Ende der Stange 69 fest mit dieser verbundene Platte 54 gleichsinnig verschwenkt.

Dadurch, daß die der Rinne 75 gegenüberliegende Rinne 74 spiegelbildlich konturiert ist, wird die Stange 68 im Uhrzeigersinn verschwenkt.

Daraus folgt, daß die beiden Greifarme 25 und 26 in Richtung der Längsachsen der Stangen 68 und 69 gesehen, entgegengesetzt verschwenkt werden. Bei der nach unten gerichteten Verschiebung des Kulissenelements 40 werden auch gleichzeitig über die Stangen 39 bzw. 59 die Greifarme 25 und 26 in einer gegenläufig gerichteten Bewegung um ihre Anlenkungspunkte an den Platten 34 bzw. 54 verschwenkt. Bei einer nach unten gerichteten Bewegung des Kulissenelements 40 aus der in Fig. 3 dargestellten Stellung, wird der Greifarm 25 entgegen dem Uhrzeigersinn verschwenkt, wohingegen der Greifarm 26 im Uhrzeigersinn verschwenkt wird. Daraus folgt, daß sich die Werkzeughalter 37 bzw. 57 aufeinander zu bewegen.

Die Schwenkbewegung des Greifarmes 25 ist dabei so eingerichtet, daß der Werkzeughalter 37 exakt von der in Fig. 3 dargestellten Endposition, der sogenannten Entnahme- bzw. Bestückungsposition, in die Spindelposition überführt wird, die in der Darstellung von Fig. 3 der Werkzeughalter 57 inne hat.

Gleichzeitig soll der Werkzeughalter 57 aus der Spindelposition durch Verschwenken des Greifarmes 26 exakt in die Position gebracht werden, die der Werkzeughalter 37 in der in Fig. 3 dargestellten Position inne hat. Diese Endposition, in der die Stellungen der Werkzeughalter 37 und 57 genau umgekehrt sind, ist in Fig. 6 dargestellt.

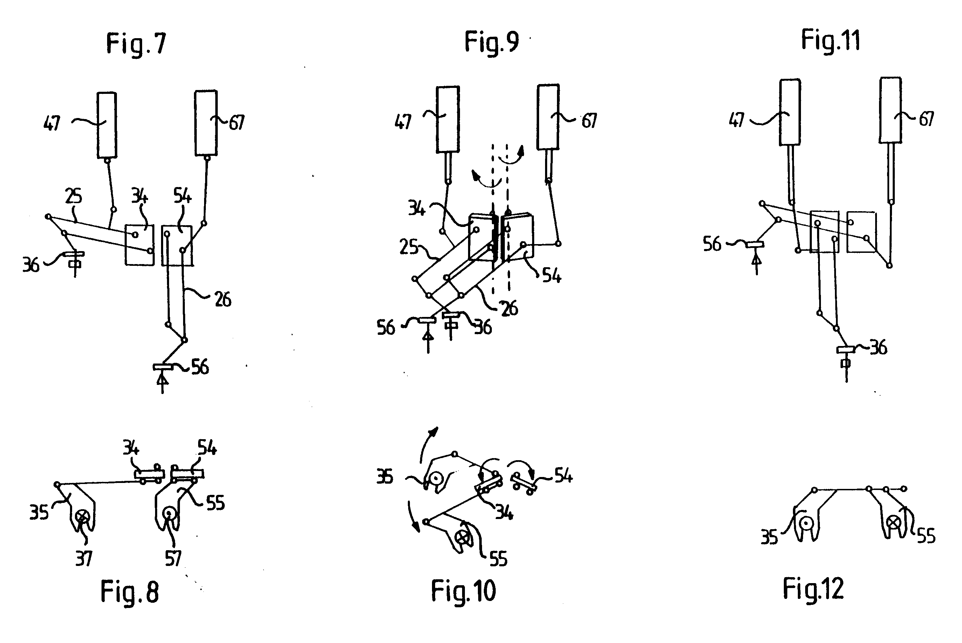

Zur Erläuterung des Bewegungsablaufes zwischen den in Fig. 3 und 6 dargestellten Endpositionen der verschwenkbaren Greifarme 25 und 26, ist dieser Ablauf skizzenhaft in Fig. 7 bis 12 dargestellt.

Fig. 7 entspricht dabei der Darstellung von Fig. 3, wobei Fig. 8 eine Draufsicht auf das erste Greifarmpaar 27 darstellt.

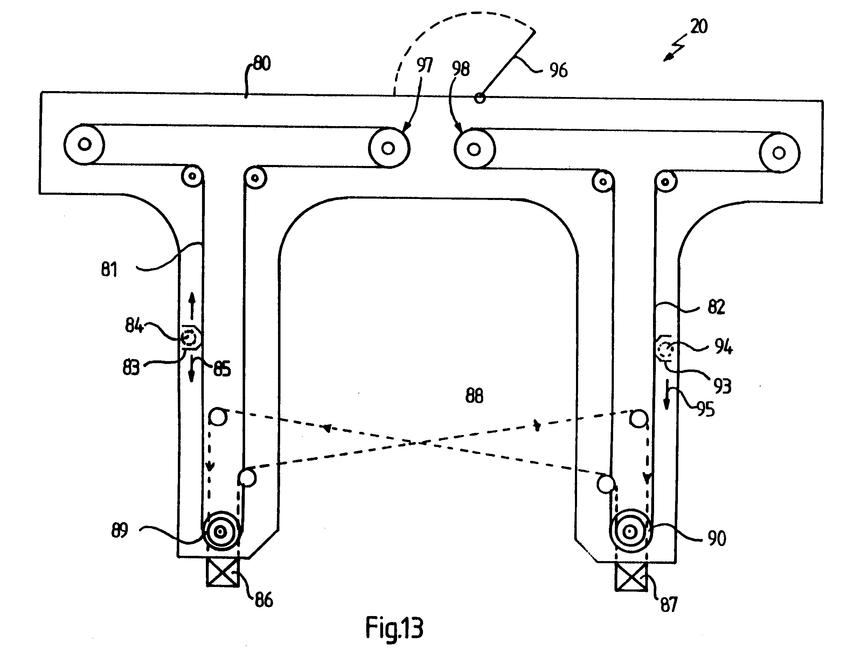

Fig. 11 entspricht der Darstellung von Fig. 6, wobei Fig. 12 ebenfalls eine Draufsicht darstellt.

Fig. 9 entspricht einer Übergangsstellung, in der das Kulissenelement 40 aus der in Fig. 3 dargestellten Position so weit nach unten verschoben wurde, daß die Rollen 71 bzw. 73 sich in ihrer maximal ausgelenkten Position befinden, d.h. an einer Stelle im Kulissenelement 40, bei dem die Rinnen in Querrichtung den größten Abstand voneinander aufweisen.

Wie aus Fig. 8 zu entnehmen, verlaufen in einer Endposition des ersten Greifarmpaares 27 die Platten 34 bzw. 54 in einer Ebene. Der Greifer 35 hält dabei den Werkzeughalter 37 derart, daß das Werkzeug sich etwa dabei in Höhe der Platte 34 befindet. Der Greifer 55 hält den Werkzeughalter 57 derart, daß er im Spindelkopf aufgenommen ist und an einer tieferen Position arbeitet.

Durch Absenken des Kulissenelements 40 aus der in Fig. 3 dargestellten Stellung, werden durch die Stangen 39 bzw. 59 die Arme 25 und 26 in einer gegenläufigen Bewegung verschwenkt, wobei sich die Werkzeughalter 37 bzw. 57 aufeinander zu bewegen. Sobald die Rollen 71 bzw. 73 durch die Rinnen 74, 75 seitlich abgelenkt werden, werden über die Stangen 68, 69 die Platten 34 bzw. 54 jeweils um vertikale Achsen gegensinnig verschwenkt. Das Verschwenkungsmaß hat sein Maximum in dem Bereich, in dem sich die Werkzeughalter 36 bzw. 56 auf gleicher Höhe befinden, d.h. in dem Bereich, in dem sie aneinander vorbeibewegt werden müssen. Wie aus Fig. 10 zu entnehmen, wird durch die Verschwenkung der Platten 34 und 54 erreicht, daß sich die Greifer 35 bzw. 55 in vertikaler Richtung aneinander vorbeibewegen können. Nach Durchlaufen der in Fig. 9 und 10 dargestellten Stellung, werden die Platten 34 und 54 in entgegengesetzter Richtung, jedoch ebenfalls wieder gegenläufig verschwenkt. Dies geschieht dadurch, daß die Rollen 71 und 73 in dem in Fig. 3 zu erkennenden, oberen, sich annähernden Bereich der Rinnen 74 bzw. 75 laufen. In der in Fig. 6, 11 und 12 dargestellten Endposition, ist das Kulissenelement 40 maximal nach unten bewegt worden, der Werkzeughalter 57 befindet sich in der Entnahme- bzw. Bestückungsposition, wohingegen sich der Werkzeughalter 37 in der Spindelposition befindet.

Der Werkzeughalter 37 hat eine schräg von oben nach unten verlaufende, sich vom Spindelstock 12 weg erhebende, gekrümmte Ortslinie durchlaufen. Gleichzeitig hat der Werkzeughalter 57 eine von unten nach schräg oben gerichtete, in Richtung zum Spindelstock 12 gekrümmte Ortskurve durchlaufen.

Der in Fig.3 und 6 dargestellte Verlauf der Rinnen 74 bzw. 75 kann je nach Ausgestaltung der Greifer 35 bzw. 55 angepaßt werden bzw., um keine ruckartigen Verschwenkbewegungen zu erzeugen, auch als sanfte Rundung ausgebildet sein.

Die zuvor in Zusammenhang mit Fig. 3 bis 12 getätigten Ausführungen sind entsprechend für das in Fig. 1 auf der rechten Seite der Achse 18 angeordnete zweite Greifarmpaar 30 anzuwenden.

Das zweite Greifarmpaar 30 ist in Fig. 1 in einer Stellung angeordnet, die der ausgefahrenen Stellung der Kolben-Zylinder-Einheiten, wie sie in Fig. 6 dargestellt ist, entspricht.

Die in Fig. 1 dargestellten Greifarmpaare 27 und 30 können aber selbstverständlich auch so geschaltet sein, daß die entsprechenden Kolben-Zylinder-Einheiten gleichsinnig arbeiten.

In der in Fig. 1 dargestellten Arbeitsweise ist es jedoch möglich, die Kolben-Zylinder-Einheiten, die das erste Greifarmpaar 27 bewegen, mit der Kolben-Zylinder-Einheiten, die das zweite Greifarmpaar 30 bewegen, derart zu koppeln, daß das Druckmedium, das für ein Ausfahren der. Kolbenstangen einer Einheit auf einer Seite sorgt, der Kolben-Zylinder-Einheit bzw. -einheiten der anderen Seite entzogen wird, wobei dort dann die Kolbenstangen eingezogen werden.

Aus Fig. 13 ist zu entnehmen, daß zur Versorgung der beiden Greifarmpaare 27 und 30 mit Werkzeughaltern jeweils eine T-förmige Endlosbahn 81 bzw. 82 vorgesehen ist, die in einem gemeinsamen Magazingehäuse 80 des Magazins 20 aufgenommen sind.

Der senkrechte Teil des T's der Endlosbahn 81 erstreckt sich, entsprechend den Darstellungen von Fig. 1 und 2, seitlich links vom Spindelstock 12, wohin sich der entsprechende Teil der Endlosbahn 82 rechts vom Spindelstock 12 erstreckt.

Die querverlaufenden Abschnitte der T's sind an der rückwärtigen Seite des Spindelstockes 12 angeordnet und verlaufen in einer Linie. Die beiden Endlosbahnen 81 und 82 verlaufen in einer Ebene, die senkrecht zur Hauptspindelachse 18 verläuft. Die Endlosbahn 81 ist an ihrem äußeren Umfang mit zahlreichen Greifern 83 versehen, wobei in Fig. 13 nur einer dargestellt ist, die jeweils zur Aufnahme eines Werkzeughalters 84 dienen.

Gleichermaßen ist das Endlosband 82 mit Greifern 93 zur Aufnahme von Werkzeughaltern 94 versehen. Am vorderen, stirnseitigen Ende der senkrechten T-Abschnitte der Endlosbahnen 81 und 82 ist jeweils eine Entnahme- bzw. Bestückungsstation 86 bzw. 87 angeordnet. Die Entnahme- bzw. Bestückungsstation 86 dient zur Versorgung des ersten Greifarmpaares 27, wohingegen die Entnahme- bzw. Bestückungsstation 87 zur Versorgung des zweiten Greifarmpaares 30 dient.

Eine als Antriebsrolle ausgestaltete Umlenkrolle 89 der ersten Endlosbahn 81 ist mit der entsprechenden, spiegelbildlich angeordneten Umlenkrolle 90 der Endlosbahn 82 über ein einfach gekreuztes Riemenelement 88 verbunden. Wird die Rolle 89 daher entgegen dem Uhrzeigersinn bewegt, wird das auf der linken äußeren Seite befindliche Werkzeug 84 der Endlosbahn 81 auf die Entnahme- bzw. Bestückungsposition 86 zu bewegt. Durch die einfach gekreuzte Führung zur Rolle 90, wird gleichermaßen ein spiegelbildlich angeordnetes, auf der rechten Seite der Endlosbahn 82 befindliches Werkzeug 94 gleichsinnig und um die gleiche Wegstrecke auf die Entnahme- bzw. Bestückungsstation 87 zu bewegt. Werden also die beiden T-förmigen Endlosbahnen 81 und 82 spiegelsymmetrisch bestückt, können durch die Kopplung mittels eines einzigen Antriebes synchron beide Entnahme- bzw. Bestückungsstationen 86 und 87 mit einem gleichartigen Werkzeug versorgt werden.

Das hat zur Folge, daß auch beide Greifarmpaare 27 und 30 einen gleichen Werkzeughalter vom Magazin zur Spindelposition überbringen bzw. von dieser weg transportieren, d.h. es können zwei gleiche Werkstücke gleichzeitig mit zwei gleichen Werkzeugen bearbeitet werden.

Es ist somit eine Verdopplung der Bearbeitungskapazität gegenüber einer Einspindelausführung erreicht.

Der gegensinnige Antrieb der Endlosbahnen 81 und 82 ermöglicht ferner ein einfacheres Bestücken der Greifer 83 bzw. 93. Wird nämlich eine mittig angeordnete Platte 96 an der Rückseite des Gehäuses 80 geöffnet, so werden Positionen 97 bzw. 98 der Endlosbahnen 81 bzw. 82 zugänglich, an denen sich gleiche Werkzeughalter befinden. Diese können daher jeweils paarweise bestückt bzw. entnommen werden, was Irrtümer vermeiden hilft.

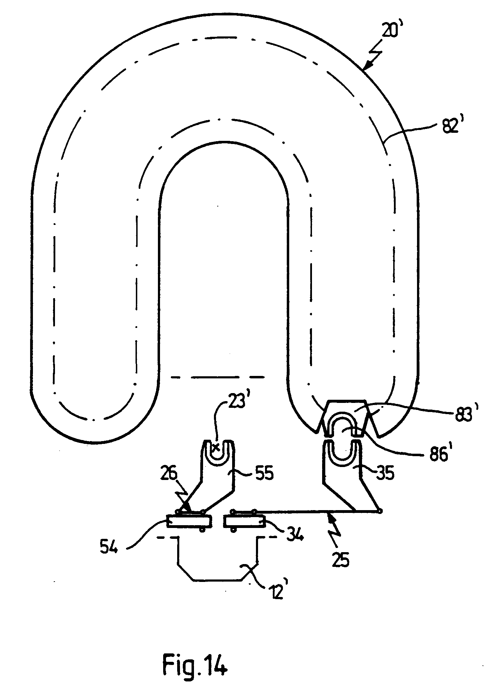

Schließlich zeigt Fig. 14 in einer schematisierten Draufsicht ein weiteres Ausführungsbeispiel einer erfindungsgemäßen Werkzeugmaschine, bei der das Werkzeugmagazin 20' nach Art eines Hufeisens ausgebildet ist. Ein solches "Hufeisenmagazin" ist bekannt und beispielsweise in der DE-PS 35 21 009 der Anmelderin mit allen Einzelheiten beschrieben. Der Offenbarungsgehalt jener Schrift wird durch diese Bezugnahme auch zum Offenbarungsgehalt der vorliegenden Anmeldung gemacht.

Das Hufeisenmagazin 20' ist mit einer ebenfalls hufeisenförmig verlaufenden Endlosbahn 82' versehen, aus der Werkzeughalter 83' an einer Entnahme- bzw. Bestückungsposition 86' entnommen bzw. bestückt werden können. Im Gegensatz zu dem bekannten Hufeisenmagazin, wie es in der bereits genannten DE-PS 35 21 009 beschrieben ist, weist das Hufeisenmagazin 20' nur eine einzige derartige Position 86' auf.

Zum Werkzeugwechsel ist wiederum das Greifarmpaar mit Greifarmen 25, 26 in der bereits beschriebenen Weise vorgesehen, wobei das Greifarmpaar am Spindelstock 12' der Werkzeugmaschine angeordnet ist. Die Spindelachse 23' befindet sich dabei vorzugsweise in der Längsmittelebene des Hufeisenmagazins 20'.

Auf diese Weise ist es in der bereits beschriebenen Weise möglich, mittels der Halter 35, 55 Werkzeughalter zwischen der Spindelaufnahme und dem Werkzeugmagazin hin- und herzuverfahren.

## Patentansprüche

1. Werkzeugmaschine mit einem Spindelstock (12), mit einem Werkzeugmagazin (20), in dem eine Mehrzahl von mit Werkzeughaltern (37, 57; 84, 94) bestückten Greifern (36; 56; 83, 93) entlang einer Endlosbahn (81, 82) verfahrbar ist, und mit zwei Greifarmen (25, 26; 28, 29) zum Transportieren der Werkzeughalter (37; 57; 84, 94) zwischen einer gemeinsamen Entnahme- bzw. Bestückungsposition (86, 87) am Werkzeugmagazin (20) und einer Spindelposition an einem Spindelkopf des Spindelstockes (12), wobei die Greifarme (25, 26; 28, 29) beidseitig einer Achse (23, 24) des Spindelstockes (12) auf gegenüberliegenden Seiten neben dem Spindelstock (12) angelenkt und gleichzeitig und gegenläufig zwischen ihrer Spindelposition und ihrer Entnahme- bzw. Bestückungsposition (86, 87) verschwenkbar sind, dadurch gekennzeichnet, daß die Greifarme (25, 26; 28, 29), einander überkreuzend, entlang von nur auf einer Seite des Spindelstockes (12) verlaufenden Ortskurven zu der gemeinsamen Entnahme- bzw. Bestückungsposition (86, 87) verschwenkbar sind, die sich asymmetrisch zur Achse (23, 24) auf der einen Seite des Spindelstockes (12) befindet.

2. Werkzeugmaschine nach Anspruch 1, dadurch gekennzeichnet, daß der Spindelstock (12) als Doppelspindelstock mit zwei Spindeln (23, 24) ausgebildet ist, daß jede der Spindeln (23, 24) mit einem Paar (27, 30) von zwei Greifarmen (25/26, 28/29) versehen ist, und daß die gemeinsame Entnahme- bzw. Bestückungsposition (86, 87) jedes Paares (27, 30) sich jeweils auf der von der jeweils anderen Spindel (23, 24) abgewandten Seite der Spindel (24, 23) befindet.

3. Werkzeugmaschine nach Anspruch 1 oder 2, dadurch gekennzeichnet, daß jeder Greifarm (25, 26; 28, 29) maschinenseitig an ein Organ (33, 53) des Spindelstockes (12) zwischen den Endpositionen hin- und herschwenkbar angelenkt ist, und daß jedes Organ (33, 53) des Spindelstockes (12) um eine weitere Achse derart schwenkbar ist, daß die gegenläufig verschwenkbaren Arme (25, 26; 28, 29) berührungsfrei aneinander vorbeiführbar sind.

4. Werkzeugmaschine nach Anspruch 3, dadurch gekennzeichnet, daß jeder Greifarm (25, 26; 28, 29) um eine etwa senkrecht zur vertikalen Spindelachse (23, 24) verlaufenden Achse schwenkbar an einem Organ (33, 53) des Spindelstockes (12) angelenkt ist, und daß die weitere Achse vertikal verläuft.

5. Werkzeugmaschine nach Anspruch 3 oder 4, dadurch gekennzeichnet, daß ein Betätigungsorgan (47, 67) zum Verschwenken der Greifarme (25, 26; 28, 29) auch zur Betätigung des verschwenkbaren Organes (33, 53) dient.

6. Werkzeugmaschine nach Anspruch 5, dadurch gekennzeichnet, daß das Betätigungsorgan (47, 67) mit einem Kulissenelement (40) verbunden ist, das durch das Betätigungsorgan (47, 67) längs einer vertikalen Achse am Spindelstock (12) auf- und abbewegbar ist, daß das Kulissenelement (40) über je einen in einer Rinne (74, 75) des Kulissenelements (40) laufendes Element (71, 73) mit dem verschwenkbaren Organ (33, 53) derart verbunden ist, daß ein Auf- und Abbewegen des Kulissenelements (40) die verschwenkbaren Organe (33, 53) jeweils gegensinnig aus einer Ruhelage bis zu einem Maximum dann wieder in die Ruhelage zurück verschwenkt.

7. Werkzeugmaschine nach Anspruch 6, dadurch gekennzeichnet, daß die Rinnen (74, 75) derart konturiert sind, daß das Maximum der Verschwenkbewegung jedes verschwenkbaren Organes (33, 53) der Stellung entspricht, in der sich die Werkzeughalter (37, 57) der gegenläufig arbeitenden Greifarme (25, 26; 28, 29) kreuzen.

8. Werkzeugmaschine nach Anspruch 6 oder 7, dadurch gekennzeichnet, daß das verschwenkbare Organ (33, 53) als plattenförmiger Körper (34, 54) ausgebildet ist, an dessen Außenseite ein Arm (25, 26) angelenkt ist, und daß sich vom Körper (34, 54) eine Stange (68, 69) weg erstreckt, die am äußeren Ende mit einem vorspringenden Element (70, 72) versehen ist, das in der Rinne (74, 75) des Kulissenelements (40) läuft und dabei die Stange (68, 69) um ihre Längsachse verschwenkt.

9. Werkzeugmaschine nach Anspruch 8, dadurch gekennzeichnet, daß die Stange (68, 69) im Bereich zwischen plattenförmigem Körper (34, 54) und vorspringendem Element (70, 72) im Spindelstock (12) axial fest, jedoch um ihre Längsachse schwenkbar gehalten ist.

10. Werkzeugmaschine nach einem oder mehreren der Ansprüche 6 bis 9, dadurch gekennzeichnet, daß das Kulissenelement (40) über je einen beidseitig angelenkten Stab (39, 59) mit je einem Arm (25, 26) derart verbunden ist, daß eine Bewegung des Kulissenelements (40) in einer Richtung zwischen zwei vertikalen Endpunkten das gegenläufige Verschwenken der Arme (25, 26) zwischen deren Endpositionen (Spindel- und Entnahme- bzw. Bestückungsposition) verursacht, und daß der Stab (39, 59) dabei der Verschwenkbewegung des verschwenkbaren Organes (33, 53) folgt.

11. Werkzeugmaschine nach Anspruch 10, dadurch gekennzeichnet, daß der eine Stab (39) mit einem ersten Arm (25), der als einarmiger Hebel (31) ausgebildet ist, zwischen dessen Hebelachse und dessen äußerem, einen Greifer (36) tragenden Ende gelenkig verbunden ist, und daß der andere Stab (59) mit einem äußeren Ende eines zweiten Armes (26), der als zweiarmiger Hebel (51) ausgebildet ist, gelenkig verbunden ist, wobei der zweite Arm (26) an seinem anderen äußeren Ende mit einem Greifer (56) versehen ist.

12. Werkzeugmaschine nach einem oder mehreren der Ansprüche 1 bis 11, dadurch gekennzeichnet, daß jeder Arm (25, 26) mit einer Parallelogrammführung versehen ist.

13. Werkzeugmaschine nach einem oder mehreren der Ansprüche 5 bis 12, dadurch gekennzeichnet, daß das Betätigungsorgan (47, 67) als in vertikaler Richtung arbeitende, Kolben-Zylinder-Einheit (47, 67) ausgebildet ist, deren äußeres Kolbenstangenende mit dem Kulissenelement (40) verbunden ist.

14. Werkzeugmaschine nach Anspruch 13, dadurch gekennzeichnet, daß das Betätigungsorgan zwei symmetrisch zur Spindelachse (23) angeordnete Kolben-Zylinder-Einheiten (47 und 67) aufweist, zwischen denen das Kulissenelement (40) und darunter gelegen die verschwenkbaren Organe (33, 53) angeordnet sind, und daß die im Kulissenelement (40) aufgenommenen Teile der Stangen (68, 69) ebenfalls symmetrisch zur Spindelachse (23) verlaufen.

15. Werkzeugmaschine nach einem oder mehreren der Ansprüche 1 bis 14, dadurch gekennzeichnet, daß die Endlosbahn (81, 82) des Werkzeugmagazin (20) T-förmig verläuft, und daß die Endlosbahn (81, 82) in einer Ebene senkrecht zur vertikalen Achse (18) und höher als die Spindelposition verfahrbar ist, wobei sich die Entnahme-bzw. Bestückungsposition (86, 87) am unteren Ende des T's befindet.

16. Werkzeugmaschine nach einem oder mehreren der Ansprüche 2 bis 15, dadurch gekennzeichnet, daß jeder Spindel (22, 23) jeweils ein Werkzeugmagazin (20) mit je einer T-förmigen Endlosbahn (81 und 82) zugeordnet ist.

17. Werkzeugmaschine nach Anspruch 16, dadurch gekennzeichnet, daß beide Endlosbahnen (81 und 82) über einen einzigen Antrieb mittels eines einmal gekreuzt geführten Riemenelements (88) synchron verfahrbar sind.

18. Werkzeugmaschine nach Anspruch 16 oder 17, dadurch gekennzeichnet, daß die T-förmigen Endlosbahnen (81 und 82) hinter dem Hauptspindelstock (12) an gegenüberliegenden, äußeren Enden des querverlaufenden Abschnittes der T's aneinander grenzen und in einem durchgehenden Magazingehäuse (80) aufgenommen sind.

19. Werkzeugmaschine nach einem oder mehreren der Ansprüche 1 bis 14, dadurch gekennzeichnet, daß die Endlosbahn (82') des Werkzeugmagazins (20') hufeisenförmig verläuft, wobei sich die Entnahme-bzw. Bestückungsposition (86') an einem freien Ende eines der Schenkel des Hufeisens befindet.

## Claims

1. Machine tool comprising a spindle stock (12), a toolholder magazine (20) in which a plurality of grippers (36; 56; 83, 93) are conveyable along an endless path (81, 82), said grippers (36; 56; 83, 93) being equipped with toolholders (37, 57; 84, 94), and two gripper arms (25, 26; 28, 29) arranged for transferring said toolholders (37, 57; 84, 94) between a common pick-up and/or mounting position (86, 87) at said toolholder magazine (20) and a spindle position at a spindle head of said spindle stock (12), said gripper arms (25, 26; 28, 29) being hinged laterally to an axis (23, 24) of said spindle stock (12) at opposite sides of said spindle stock (12) and being arranged for being pivoted simultaneously and oppositely directed between their spindle position and their pick-up and/or mounting position (86, 87), characterized in that said gripper arms (25, 26; 28, 29) are arranged for being pivoted to said common pick-up and mounting position (86, 87) along a locus curve extending solely on one side of said spindle stock (12) and thereby crossing each other, said common pick-up and mounting position (86, 87) being arranged on one side of said spindle stock (12) asymmetrically to said axis (23, 24).

2. Machine tool according to claim 1, characterized in that said spindle stock (12) is designed as to be a double spindle stock comprising two spindles (23, 24), said two spindles (23, 24) having each a pair (27, 30) of two gripper arms (25/26, 28/29), and that said common pick-up and mounting position (86, 87) for each pair (27, 30) is located at a respective side of the respective spindle (24, 23) opposite to said other spindle (23, 24).

3. Machine tool according to claim 1 or 2, characterized in that each said gripper arm (25, 26; 28, 29) is pivoted at its machine end on an element (33, 53) of said spindle stock (12) for being pivoted between its repective end positions, and that each element (33, 53) of said spindle stock (12) is pivotable about an additional axis for allowing said gripper arms (25, 26; 28, 29), when pivoted in opposite directions, to pass each other without getting into contact with each other.

4. Machine tool according to claim 3, characterized in that each gripper arm (25, 26; 28, 29) is pivoted on one of said elements (33, 53) of said spindle stock (12) so as to be pivoted about an axis extending substantially perpendicularly to said vertical spindle axis (23, 24), said additional axis extending in a vertical direction.

5. Machine tool according to claim 3 or 4, characterized in that actuating means (47, 67) are provided for controlling the pivoting movement of said gripper arms (25, 26; 28, 29), and, simultaneously, actuating said swinging element (33, 53).

6. Machine tool according to claim 5, characterized in that said actuating means (47, 67) is connected with a cam element (40) being displaceable by said actuating means (47, 67) up and down on said spindle stock (12) along a vertical axis, that said cam element (40) is connected with said swinging elements (33, 53) via another element (71, 73) running along a groove (74, 75) in said cam element (40) such that any upward or downward movement of said cam element (40) will cause said swinging elements (33, 53) to pivote in opposite directions, from a rest position to a maximum and then back into said rest position.

7. Machine tool according to claim 6, characterized in that contours of said grooves (74, 75) are designed such that said maximum of said pivoting movement of each swinging element (33, 53) corresponds to that position in which said toolholders (37, 57) of said oppositely directed gripper arms (25, 26; 28, 29) move past each other.

8. Machine tool according to claim 6 or 7, characterized in that said swinging element (33, 53) is designed as a plate-shaped body (34, 54) with an arm (25, 26) pivoted on its outside, and that said body (34, 54) is provided with an outwardly projecting rod (68, 69) carrying on its outer end a protruding element (70, 72) which runs in said groove (54, 75) of said cam element (40) thereby causing said rod (68, 69) to pivote about its longitudinal axis.

9. Machine tool according to claim 8, characterized in that said rod (68, 69) is held in said spindle stock (12) in the area between said plate-shaped body (34, 54) and said protruding element (70, 72), in axially fixed relationship, but permitted to pivote about its longitudinal axis.

10. Machine tool according to one or more of claims 6 through 9, characterized in that said cam element (40) is connected with an arm (25, 26) each via a rod (39, 59), said rod being hinged on either side of said cam element (40), such that any movement of said cam element (40) in one direction, between two vertical end positions, will cause said arms (25, 26) to swing in opposite directions, between their end positions (spindle position and pick-up and/or mounting position), said rod (39, 59) being caused to follow the pivoting movement of said swinging element (33, 53).

11. Machine tool according to claim 10, characterized in that said one rod (39) is hinged to a first arm (25) taking the form of a one-armed lever (31), at a point between its lever axis and its outer end carrying a gripper (36), and that said other rod (59) is hinged to an outer end of a second arm (26), being designed as a two-armed lever (51), and carrying at its outer end a gripper (56).

12. Machine tool according to one or more of claims 1 through 11, characterized in that each arm (25, 26) is provided with a parallelogram guide.

13. Machine tool according to one or more of claims 5 through 12, characterized in that said actuating means (47, 67) is designed as a vertical-stroke piston-and-cylinder unit (47, 67) having an outer end of its piston rod connected with said cam element (40).

14. Machine tool according to claim 13, characterized in that said actuating means comprise two piston-and-cylinder units (47 and 67) arranged symmetrically to said spindle axis (23), said cam element (40) and, below the latter, said swinging elements (33, 53) being enclosed between said piston-and-cylinder units, and that parts of said rods (68, 69) comprised in said cam element (40) extend likewise symmetrically to said spindle axis (23).

15. Machine tool according to one or more of claims 1 through 14, characterized in that said endless path (81, 82) of said toolholder magazine (20) is designed in T-shape, and that said endless path (81, 82) is displaceable in a plane vertical to said vertical axis (18) and above said spindle position, said pick-up and/or mounting position being located at a lower end of said T.

16. Machine tool according to one or more of claims 2 through 15, characterized in that each spindle (22, 23) has assigned to it a respective toolholder magazine (20) each with a T-shaped endless path (81 and 82).

17. Machine tool according to claim 16, characterized in that said two endless paths (81 and 82) are operated via a single drive, by means of a belt element (88) whose path crosses once.

13

**18.** Machine tool according to claim 16 or 17, characterized in that said T-shaped endless paths (81 and 82) adjoin each other behind said main spindle stock (12) by opposite outer ends of transverse sections of said T's, and are being accomodated in one common magazine housing (80).

**19.** Machine tool according to one or more of claims 1 through 14, characterized in that said endless path (82') of said toolholder magazine (20') is designed in horseshoe shape, said pick-up and/or mounting position (86') being located at a free end of one leg of said horseshoe.

**Revendications**

**1.** Machine-outil comportant une poupée (12), comportant un magasin d'outils (20) dans lequel plusieurs pinces (36 ; 56 ; 83, 93), équipées de porte-outils (37, 57 ; 84, 94), sont déplaçables le long d'une voie sans fin (81, 82) et comportant deux bras de prise (25, 26 ; 28, 29) pour le transport des porte-outils (37 ; 57 ; 84, 94), entre une position commune de prélèvement ou d'équipement (86, 94) sur le magasin d'outils (20) et une position de broche sur une tête de broche de la poupée (12), les bras de prise (25, 26 ; 28, 29) s'articulant des deux côtés d'un axe (23, 24) de la poupée (12), sur des côtés opposés, à côté de la poupée (12) et pouvant pivoter simultanément et en sens contraire, entre leur position de broche et leur position de prélèvement ou d'équipement (86, 87), caractérisée en ce que les bras de prise (25, 26 ; 28, 29) peuvent pivoter en se croisant l'un l'autre, le long de courbes s'étendant sur un côté seulement de la poupée (12), vers la position commune de prélèvement ou d'équipement (86, 87) qui se trouve, asymétriquement par rapport à l'axe (23, 24), sur un côté de la poupée (12).

**2.** Machine-outil selon la revendication 1, caractérisée en ce que la poupée (12) est une poupée double comportant deux broches (23, 24), en ce chacune des broches (23, 24) est pourvue d'une paire (27, 30) de bras de prise (25/26, 28/29) et en ce que la position commune de prélèvement ou d'équipement (86, 87) de chaque paire (27, 30) se trouve sur le côté de la broche (24, 23), opposé à l'autre broche (23, 24).

**3.** Machine-outil selon la revendication 1 ou 2, caractérisée en ce que chaque bras de prise (25, 26 ; 28, 29) s'articule, de manière à pouvoir pivoter en aller et retour, côté machine, sur un organe (33, 53) de la poupée (12), entre les positions de fin de course, et en ce que chaque organe (33, 53) de la poupée (12) peut pivoter autour d'un autre axe de manière que les bras (25, 26 ; 28, 29) pivotant en sens contraire, passent l'un devant l'autre sans se toucher.

**4.** Machine-outil selon la revendication 3, caractérisée en ce que chaque bras de prise (25, 26 ; 28, 29) s'articule sur un organe (33, 53) de la poupée (12), de manière à pouvoir pivoter autour d'un axe à peu près perpendiculaire à l'axe de broche (23, 24) vertical, et en ce que l'autre axe est vertical.

**5.** Machine-outil selon la revendication 3 ou 4, caractérisée en ce qu'un organe d'actionnement (47, 67) destiné à faire pivoter les bras de prise (25, 26 ; 28, 29) sert aussi à actionner l'organe pivotant (33, 53).

**6.** Machine-outil selon la revendication 5, caractérisée en ce que l'organe d'actionnement (47, 67) est relié à un élément à coulisse (40) qui peut être déplacé en montée et descente par l'organe d'actionnement (47, 67), le long d'un axe vertical, sur la poupée (12), en ce que l'élément à coulisse (40) est relié, par un élément (71, 73), s'étendant dans une gorge (74, 75) de l'élément à coulisse (40), avec l'organe (33, 53) pivotant, en ce qu'un déplacement en montée et descente de l'élément à coulisse (40) fait pivoter les organes (33, 53) pivotants, en sens contraire l'un par rapport à l'autre, d'une position de repos à un maximum puis à nouveau en position de repos.

**7.** Machine-outil selon la revendication 6, caractérisée en ce que les gorges (74, 75) ont un contour tel que le maximum du déplacement en pivotement de chaque organe (33, 53) pivotant, correspond à la position dans laquelle les porte-outils (37, 57) croisent les bras de prise (25, 26 ; 28, 29) fonctionnant en sens contraire.

**8.** Machine-outil selon la revendication 6 ou 7, caractérisée en ce que l'organe (33, 53) pivotant est un corps (34, 54) en forme de plaque sur le côté extérieur duquel s'articule un bras (25, 26) et en ce qu'à partir du corps (34, 54) s'étend une tige (68, 69) qui est pourvue, à l'extrémité extérieure, d'un élément (70, 72) saillant qui s'étend dans la gorge (74, 75) de l'élément à coulisse (40) et qui fait pivoter la tige (68, 69) autour de son axe longitudinal.

9. Machine-outil selon la revendication 8, caractérisée en ce que la tige (68, 69) est maintenue axialement fixe dans la zone comprise entre le corps (34, 54) en forme de plaque et l'élément saillant (70, 72), dans la poupée (12), mais de manière à pouvoir pivoter autour de son axe longitudinal.

10. Machine-outil selon une ou plusieurs des revendications 6 à 9, caractérisée en ce que l'élément à coulisse (40) est relié par des barres (39, 59) s'articulant sur chacun des côtés à des bras (25, 26), de telle sorte qu'un déplacement de l'élément à coulisse (40) dans un sens, entre deux points verticaux de fin de course, provoque le pivotement en sens contraire des bras (25, 26) entre leurs positions de fin de course (position de broche et de prélèvement ou d'équipement) et en ce que la barre (39, 59) suit dans ce cas le pivotement de l'organe (33, 53) pivotant.

11. Machine-outil selon la revendication 10, caractérisée en ce qu'une barre (39) avec un premier bras (25) qui est conçu sous la forme d'un levier (31) à un bras, est reliée articulée entre son axe de levier et son extrémité extérieure, portant une pince (36) et en ce que l'autre barre (59) est reliée articulée avec une extrémité extérieure d'un second bras (26) qui est conçu sous la forme d'un levier (51) à deux bras, le second bras (26) étant pourvu, à son autre extrémité extérieure, d'un pince (56).

12. Machine-outil selon une ou plusieurs des revendications 1 à 11, caractérisée en ce que chaque bras (25, 26) est pourvu d'un organe de guidage en parallélogramme.

13. Machine-outil selon une ou plusieurs des revendications 5 à 12, caractérisée en ce que l'organe d'actionnement (47, 67) est un vérin (47, 67) fonctionnant dans la direction verticale dont l'extrémité extérieure de la tige de piston est reliée à l'élément à coulisse (40).

14. Machine-outil selon la revendication 13, caractérisée en ce que l'organe d'actionnement comporte deux vérins (47 et 67) disposés symétriquement par rapport à l'axe de broche (23), entre lesquels se trouvent l'élément à coulisse (40) et les organes pivotants (33, 53) situés au-dessous et en ce que les parties, logées dans l'élément à coulisse (40), des tiges (68, 69), s'étendent aussi symétriquement par rapport à l'axe de broche (23).

15. Machine-outil selon une ou plusieurs des revendications 1 à 14, caractérisée en ce que la voie sans fin (81, 82) du magasin d'outils (20) est en T et en ce que la voie sans fin (81, 82) est déplaçable dans un plan perpendiculaire à l'axe vertical (18) et plus haut que la position de broche, la position de prélèvement ou d'équipement (86, 87) se trouvant à l'extrémité inférieure du T.

16. Machine-outil selon une ou plusieurs des revendications 2 à 15, caractérisée en ce qu'à chaque broche (22, 23) est associé un magasin d'outils (20) avec chacun une voie sans fin (81 et 82) en T.

17. Machine-outil selon la revendication 16, caractérisée en ce que les deux voies sans fin (81 et 82) sont déplaçables de manière synchrone par un seul mécanisme d'entraînement, au moyen d'un élément à courroie (88) guidé croisé une fois.

18. Machine-outil selon la revendication 16 ou 17, caractérisée en ce que les voies sans fin (81 et 82) en T sont adjacentes l'une à l'autre derrière la poupée principale (12), sur des extrémités extérieures opposées de la partie transversale du T et sont logées dans un boîtier de magasin (80) continu.

19. Machine-outil selon une ou plusieurs des revendications 1 à 14, caractérisée en ce que la voie sans fin (82′) du magasin d'outils (20′) s'étend en fer à cheval, la position de prélèvement ou d'équipement (86′) se trouvant à une extrémité libre de l'une des branches du fer à cheval.

Fig.1

16

Fig.2

Fig.3

Fig.5

Fig. 4

Fig. 6

Fig.11

Fig.12

Fig.9

Fig.10

Fig.7

Fig.8

Fig.13

Fig.14